# EUROPÄISCHE PATENTSCHRIFT

(11) **EP 2 551 978 B1**
(45) Veröffentlichungstag und Bekanntmachung des Hinweises auf die Patenterteilung: **23.09.2020**
(21) Anmeldenummer: 11006298.1
(22) Anmeldetag: 29.07.2011
(51) Int. Cl.: H02G 3/22, H02G 15/013, H02G 15/02, H01R 13/52

(54) **Vorrichtung zur Durchführung einer elektrischen Leitung durch ein Gehäuse**
Device for running an electric line through a housing
Dispositif d'acheminement d'une ligne électrique au travers d'un boîtier

(43) Veröffentlichungstag der Anmeldung: 30.01.2013
(73) Patentinhaber: Delphi Technologies, Inc., Troy, MI 48007 (US); Vitesco Technologies GmbH, 30165 Hannover (DE)
(72) Erfinder: Papurcu, Necdet, 45711 Datteln (DE); Schattling, Joerg, 42699 Solingen (DE); Ulbricht, Marc, 10553 Berlin (DE); Demitter, Björn, 10553 Berlin (DE)
(74) Vertreter: Manitz Finsterwald Patent- und Rechtsanwaltspartnerschaft mbB

(56) Entgegenhaltungen:
- EP-A1- 1 289 086
- EP-A1- 2 337 164
- DE-A1- 19 526 927
- DE-A1- 19 743 710
- DE-B- 1 285 591
- US-A- 3 728 470

## Beschreibung

Die vorliegende Erfindung betrifft eine Baugruppe gemäß dem Oberbegriff des Anspruchs 1.

Derartige Baugruppen kommen beispielweise bei Batterien zum Einsatz, die für die Spannungsversorgung in Kraftfahrzeugen mit Hybridantrieb oder Elektroantrieb verwendet werden.

Eine Baugruppe nach dem Oberbegriff des Anspruchs 1 ist aus der EP 1 289 086 A1 bekannt. Weiterer Stand der Technik ist bekannt aus EP 2 337 164 A1, DE 195 26 927 A1, DE 1 285 591 B, DE 197 43 710 A1 und US 3 728 470 A.

Der vorliegenden Erfindung liegt die Aufgabe zu Grunde, eine Baugruppe zu schaffen, die es erlaubt, durch Verdrehen zwei abgeschirmte Leitungen an einem Gehäuse festzulegen und zugleich deren Abschirmungen mit dem Gehäuse zu verbinden, wobei ein Vertauschen der Leitungen vermieden wird, sodass auf besonders einfache Weise eine sichere Durchführung für die beiden Leitungen ermöglicht wird.

Die Aufgabe wird durch eine Baugruppe mit den Merkmalen des Anspruchs 1 gelöst. Bevorzugte Ausführungsformen der Erfindung sind in den abhängigen Ansprüchen angegeben.

Erfindungsgemäß weist jeder Konnektor einen Verriegelungsabschnitt auf, welcher in die Durchführungsöffnung einsteckbar und durch anschließende Verdrehung an der Montageplatte verriegelbar ist. Die Vorrichtung lässt sich daher nach Art eines Bajonettverschlusses besonders einfach zusammensetzen und verriegeln.

Die Montageplatte und die Konnektoren können jeweils einstückig ausgebildet sein. Dadurch können die Montageplatte und die Konnektoren einfach und kostengünstig hergestellt werden, zum Beispiel durch Spritzgießen.

Die Montageplatte und die Konnektoren können aus Kunststoff bestehen. Kunststoff ist ein elektrischer Isolator und eignet sich daher besonders gut als Material für die Montageplatte und die Konnektoren.

Bevorzugt weist die Montageplatte an einer dem Gehäuse zugewandten Seite Rastelemente zur Festlegung der Montageplatte am Gehäuse auf. Dadurch kann die Montageplatte ohne großen Aufwand am Gehäuse befestigt werden.

Besonders bevorzugt sind die Rastelemente um die Durchführungsöffnung herum versetzt zueinander angeordnet und durch die Gehäuseöffnung durchführbar. Durch die versetzte Anordnung der Rastelemente ergibt sich eine bessere Verteilung der Kräfte auf die Rastelemente, wenn die Montageplatte am Gehäuse fixiert ist.

Insbesondere weist jedes Rastelement eine sich nach radial außen erstreckende, an der zweiten Seite des Gehäuses einrastbare Rastnase auf. Durch die eingerasteten Rastnasen kann die Montageplatte besonders gut am Gehäuse gehalten werden.

Nach einer bevorzugten Weiterbildung der Erfindung ist eine Federscheibe, bevorzugt verliersicher, an der dem Gehäuse zugewandten Seite der Montageplatte angeordnet, insbesondere konzentrisch zu jeder Durchführungsöffnung. Durch die Federscheiben kann die Montageplatte an der ersten Seite des Gehäuses abgestützt werden, so dass die Montageplatte vom Gehäuse und von den Konnektoren weggedrückt wird. Die Federscheiben bewirken daher eine Spannung zwischen den Konnektoren und der Montageplatte, so dass ein zwischen der Montageplatte und dem Gehäuse bzw. den Konnektoren und dem Gehäuse möglicherweise vorhandenes Spiel verringert werden kann.

Die Federscheiben können beispielsweise aus CrNi-Stahl ausgebildet sein.

Nach einer bevorzugten Weiterbildung der Erfindung ist eine Nut als Aufnahme für jede Federscheibe an der dem Gehäuse zugewandten Seite der Montageplatte vorgesehen. Durch die Nut kann verhindert werden, dass die Federscheibe entlang der dem Gehäuse zugewandten Seite der Montageplatte verrutscht, während die Montageplatte am Gehäuse angebracht wird, so dass sich die Montageplatte einfacher am Gehäuse befestigen lässt.

Vorzugsweise sind die Rastnasen der um die Durchführungsöffnungen herum angeordneten Rastelemente derart weit nach radial außen geführt, dass diese die Nut zumindest teilweise überragen. Die Rastnasen bilden somit eine Verliersicherung für die Federscheiben.

Erfindungsgemäß weist jeder Verriegelungsabschnitt zumindest ein Verriegelungselement auf, welches mit der Montageplatte, insbesondere mit der vom Gehäuse abgewandten Seite der Montageplatte, in Eingriff gebracht werden kann. Durch das Verriegelungselement lässt sich der Konnektor auf einfache Weise mit der Montageplatte verriegeln.

Erfindungsgemäß steht jedes Verriegelungselement am Verriegelungsabschnitt nach radial außen hervor und in einer die jeweilige Durchführungsöffnung begrenzenden Wand der Montageplatte ist ein Kanal vorgesehen, in dem das Verriegelungselement geführt wird, wenn der Verriegelungsabschnitt in die Durchführungsöffnung eingesteckt wird. Auf diese Weise kann herstellungstechnisch besonders einfach ein in die Durchführungsöffnungen einführbarer und mit der Montageplatte verriegelbarer Verriegelungsabschnitt realisiert werden.

Erfindungsgemäß ist an der vom Gehäuse abgewandten Seite der Montageplatte eine Anlaufschräge für jedes Verriegelungselement vorgesehen, die am Ausgang des jeweiligen Kanals beginnt und sich in Umfangsrichtung der jeweiligen Durchführungsöffnung erstreckt, so dass das Verriegelungselement die Anlaufschräge hinaufgleitet und dabei die Montageplatte und den jeweiligen Konnektor zusammenzieht, wenn der vollständig eingesteckte Konnektor zur Verriegelung an der Montageplatte verdreht wird.

Besonders bevorzugt weist jede Anlaufschräge an ihrem vom Kanalausgang abgewandten Ende einen Anschlag für das jeweilige Verriegelungselement auf. Durch den Anschlag wird der Drehwinkel begrenzt, um den der jeweilige Konnektor maximal verdreht werden kann.

Jede Anlaufschräge kann eine, insbesondere vor dem Anschlag liegende, Rastvertiefung für das jeweilige Verriegelungselement aufweisen, um das jeweilige Verriegelungselement zu fixieren und ein unbeabsichtigtes Zurückdrehen des Konnektors zu verhindern. Jeder Konnektor ist somit dauerhaft sicher mit der Montageplatte verriegelt.

Erfindungsgemäß weist die Montageplatte im Bereich der Durchführungsöffnungen erste Codierungsmittel auf und die Verriegelungsabschnitte weisen zweite Codierungsmittel auf, wobei die jeweiligen ersten und zweiten Codierungsmittel derart miteinander zusammenwirken, dass die Verriegelungsabschnitte nur bei zueinander komplementär ausgebildeten ersten und zweiten Codierungsmitteln an der Montageplatte verriegelbar sind und dass die ersten und zweiten Codierungsmittel das Einstecken der Verriegelungsabschnitte in die jeweiligen Durchführungsöffnung und/oder deren anschließende Verdrehung blockieren, wenn die ersten und zweiten Codierungsmittel nicht komplementär zueinander ausgebildet sind. Durch die Codierungsmittel wirken die Durchführungsöffnungen und die Verriegelungsabschnitte nach Art einer Schlüssel-Schloss-Kombination zusammen, so dass nur der "passende" Verriegelungsabschnitt in die Durchführungsöffnung eingeführt und mit der Montageplatte verriegelt werden kann. Ein "falscher" Verriegelungsabschnitt lässt sich, vergleichbar mit einem Schlüssel, der in ein falsches Schloss eingeführt wird, dagegen nicht mit der Montageplatte verriegeln.

Die Codierungsmittel sind insbesondere von Vorteil, wenn unterschiedliche Konnektoren daran angebracht werden sollen. Durch die Codierungsmittel kann nämlich sichergestellt werden, dass jeder Konnektor nur in die vorgesehene Durchführungsöffnung eingesteckt und verriegelt werden kann, da sich anhand der Codierungsmittel - wie dies bei Schlüsseln und Schlössern bekannt ist - jeweils nur eine zueinander passende Verriegelungsabschnitt/Durchführungsöffnungs-Kombination realisieren lässt.

Die Codierungsmittel können beispielsweise dadurch gebildet sein, dass die Durchführungsöffnungen unterschiedliche Durchmesser aufweisen und die Verriegelungsabschnitte der Konnektoren entsprechend angepasste Außendurchmesser aufweisen.

Es können auch die Kanäle in einer Montageplatte und die Verriegelungselemente der Verriegelungsabschnitte als komplementär zueinander ausgebildete Codierungsmittel vorgesehen sein, indem die Tiefe und Breite des jeweiligen Kanals der Höhe und der Breite des jeweiligen Verriegelungselements entspricht. Ein anderer Konnektor mit einem Verriegelungsabschnitt, an dem ein zu breites oder zu hohes Verriegelungselement angeordnet ist, lässt sich somit nicht in die Durchführungsöffnung einführen.

Alternativ oder zusätzlich kann eine jeweilige Ausnehmung, insbesondere an der dem Gehäuse zugewandten Seite der Montageplatte, im Bereich der Durchführungsöffnung ausgebildet sein und am Verriegelungsabschnitt eines jeweiligen Konnektors eine Erhebung vorgesehen sein, die beim Einstecken des Verriegelungsabschnitts in die Durchführungsöffnung in der Ausnehmung aufgenommen wird und sich bei der Verdrehung des Konnektors in der Ausnehmung bewegen kann. Ein unpassender Konnektor, bei dem eine zu große Erhebung am Verriegelungsabschnitt vorhanden ist, lässt sich folglich nicht vollständig in die Durchführungsöffnung einstecken und verriegeln, da die zu große Erhebung nicht in der Ausnehmung aufgenommen werden kann. Die Ausnehmung und die Erhebung bilden somit ebenfalls ein komplementäres Paar von Codierungsmitteln.

Gemäß einer Weiterbildung der Erfindung weist jeder Konnektor - bezogen auf die Einsteckrichtung des Konnektors in die Durchführungsöffnung - hinter dem Verriegelungsabschnitt einen Flanschabschnitt auf, der auf der dem Verriegelungsabschnitt zugewandten Seite eine umlaufende Nut für eine Dichtung aufweist. Beispielsweise kann die Dichtung aus Silikon bestehen. Der Flanschabschnitt kann als Anschlag dienen, durch den die Einschubtiefe des Verriegelungsabschnitts in die Durchführungsöffnung begrenzt ist.

Erfindungsgemäß weist jeder Konnektor - bezogen auf die Einsteckrichtung des Konnektors in die Durchführungsöffnung - hinter dem Verriegelungsabschnitt einen Kontaktierungsabschnitt auf, in welchem mindestens eine elektrisch leitfähige Ferrule zur Kontaktierung einer Abschirmung der jeweiligen elektrischen Leitung angeordnet ist. Der Bereich der Leitung, in dem die Kontaktierung der Abschirmung erfolgt, wird somit durch den Kontaktierungsabschnitt geschützt.

Vorzugsweise ist eine elektrisch leitfähige Innen-Ferrule unterhalb jeder Abschirmung angeordnet. Außerdem ist jeweils eine elektrisch leitfähige Außen-Ferrule außerhalb der Abschirmung und außerhalb der Innen-Ferrule angeordnet. Dadurch kann die jeweilige Abschirmung besonders gut kontaktiert werden.

Besonders bevorzugt sind die jeweiligen beiden Ferrulen zusammengecrimpt, so dass sich auf einfache Weise ein dauerhafter elektrischer Kontakt zur Abschirmung herstellen lässt.

Die jeweiligen beiden Ferrulen können jeweils aus CrNi-Stahl ausgebildet sein.

Erfindungsgemäß ist ein elektrisch leitendes Kontaktelement zur elektrischen Verbindung des Gehäuses mit der Ferrule, insbesondere mit der Außen-Ferrule, vorgesehen.

Das Kontaktelement kann ebenfalls aus CrNi-Stahl ausgebildet sein.

Erfindungsgemäß weist jedes Kontaktelement einen ringförmigen Grundkörper auf, der den Verriegelungsabschnitt umgibt. An dem Grundkörper kann zumindest ein erster Kontaktarm ausgebildet sein, der derart von Grundkörper weggeführt ist, dass sich der erste Kontaktarm, insbesondere durch einen im Flanschabschnitt ausgebildeten Durchbruch, bis in den Kontaktierungsabschnitt hinein erstreckt und die dort angeordnete Ferrule, insbesondere die Außen-Ferrule, elektrisch kontaktiert.

Ferner sind am Grundkörper zweite Kontaktarme ausgebildet, die vom Grundkörper zum Gehäuse geführt sind, so dass die zweiten Kontaktarme die zweite Seite des Gehäuses elektrisch kontaktieren, wenn der Konnektor an der Montageplatte verriegelt ist.

Nach einer weiteren Ausgestaltung der Erfindung ist innerhalb jedes Kontaktierungsabschnitts - bezogen auf die Einsteckrichtung des Konnektors in die Durchführungsöffnung - hinter der zumindest einen jeweiligen Ferrule eine die elektrische Leitung, insbesondere deren Ummantelung, umgebende Unterlegscheibe angeordnet, die bevorzugt aus CrNi-Stahl besteht.

Bevorzugt ist - bezogen auf die Einsteckrichtung des Konnektors in die Durchführungsöffnung - jeweils hinter der Unterlegscheibe innerhalb des Kontaktierungsabschnitts eine die elektrische Leitung, insbesondere deren Ummantelung, umgebende Kabeldichtung angeordnet, die bevorzugt aus Silicon besteht.

Am hinteren, vom Verriegelungsabschnitt abgewandten Ende des Kontaktierungsabschnitts kann jeweils eine Dichtungskappe aufgesetzt und/oder eingeclipst sein, wobei die Dichtungskappe den Kontaktierungsabschnitt und die aus dem hinteren Ende herausgeführte elektrische Leitung umgibt. Die jeweilige Dichtungskappe kann beispielsweise aus Kunststoff bestehen.

Die Erfindung wird nachfolgend mit Bezugnahme auf die beiliegenden Zeichnungen beispielhaft beschrieben. Es zeigen, jeweils in schematischer Darstellung,
- Fig. 1: eine perspektivische Ansicht einer Vorrichtung zur Durchführung zweier elektrischer Leitungen durch ein Gehäuse,
- Fig. 2: eine perspektivische Ansicht der einzelnen Komponenten, aus denen die Vorrichtung von Fig. 1 zusammengesetzt ist,
- Fig. 3: eine perspektivische Ansicht einer Durchführungsöffnung einer Montageplatte der Vorrichtung von Fig. 1,
- Fig. 4: eine geschnittene, perspektivische Ansicht der Durchführungsöffnung der Montageplatte von Fig. 3,
- Fig. 5: eine perspektivische Ansicht eines Konnektors der Vorrichtung von Fig. 1,
- Fig. 6: eine perspektivische Ansicht der vom Gehäuse abgewandten Seite der Montageplatte mit einem in die Durchführungsöffnung eingesteckten, verriegelten Konnektor,
- Fig. 7: eine weitere perspektivische Ansicht der vom Gehäuse abgewandten Seite der Montageplatte mit dem eingesteckten, verriegelten Konnektor, und
- Fig. 8: eine Draufsicht auf die Innenseite eines Gehäuses und die vom Gehäuse abgewandte Seite einer Montageplatte.

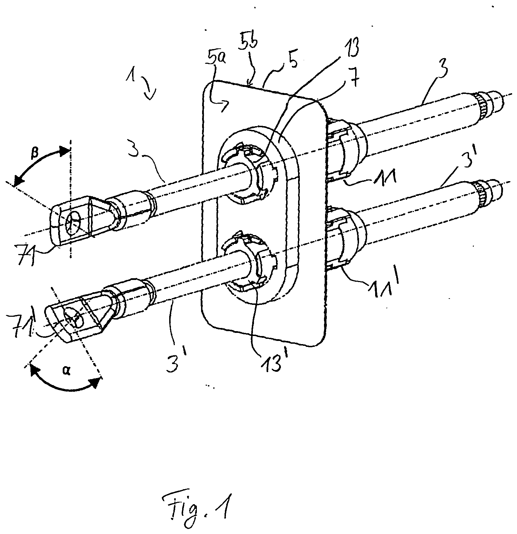

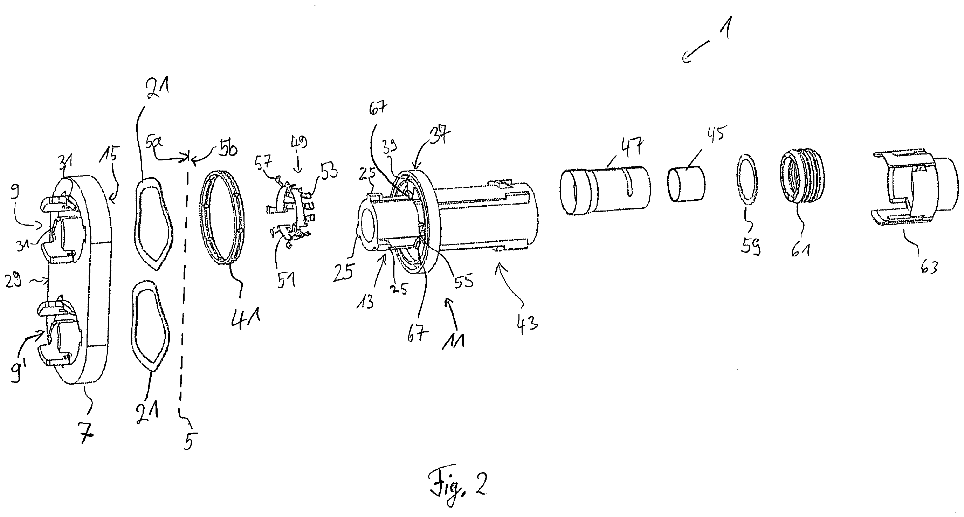

Die in Fig. 1 dargestellte Vorrichtung 1 ist zur Durchführung zweier elektrischer Leitungen 3, 3' durch ein Gehäuse 5, beispielsweise einer Batterie, vorgesehen. Die Vorrichtung 1 umfasst eine Montageplatte 7, die an der Innenseite 5a des Gehäuses 5 angebracht ist. In der Montageplatte 7 sind zwei Durchführungsöffnungen 9, 9' (vgl. Fig. 2) ausgebildet, die mit am Gehäuse 5 vorgesehenen Gehäuseöffnungen ausgerichtet sind. Durch jede Durchführungsöffnung 9, 9' ist eine der Leitungen 3, 3' hindurchgeführt. Auf der Außenseite 5b des Gehäuses 5 umgibt ein Konnektor 11, 11' jeweils eine der Leitungen 3, 3'.

Die nachfolgenden Ausführungen beziehen sich insbesondere auf den in Fig. 1 oben liegenden Teil der Montageplatte 7 und den oberen Konnektor 11 und gelten für den unten liegenden Teil der Montageplatte 7 und den unteren Konnektor 11' entsprechend. Dabei ist in Fig. 2 das Gehäuse 5 als gestrichelt eingezeichnete Linie dargestellt, um kenntlich zu machen, welche Komponenten der Vorrichtung 1 an der Innenseite 5a und welche Komponenten an der Außenseite 5b des Gehäuses 5 angeordnet sind.

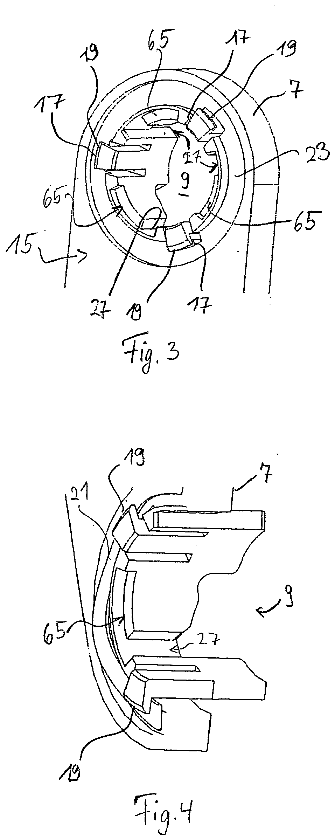

Die Montageplatte 7 weist an ihrer dem Gehäuse 5 zugewandten Seite 15 Rastelemente 17 auf (vgl. Fig. 3 und 4), mittels denen die Montageplatte 7 am Gehäuse 5 festgelegt werden kann. Dabei sind die Rastelemente 17 um die Durchführungsöffnung 9 herum versetzt zueinander derart angeordnet, dass diese durch die jeweilige am Gehäuse 5 vorgesehene Gehäuseöffnung hindurchgeführt werden und hinter dem Gehäuse 5 einrasten können. Jedes Rastelement 17 weist hierzu an seinem von der Montageplattenseite 15 abgewandten Ende eine Rastnase 19 auf, die sich nach radial außen erstreckt und die mit der Außenseite 5b des Gehäuses 5 in Eingriff treten kann (vgl. Fig. 4), um die Montageplatte 7 am Gehäuse 5 zu sichern.

An der dem Gehäuse 5 zugewandten Seite 15 der Montageplatte 7 ist konzentrisch zu der Durchführungsöffnung 9 eine Federscheibe 21 angeordnet, die in einer in Umfangsrichtung um die Durchführungsöffnung 9 herum verlaufenden Nut 23 aufgenommen ist. Wie in Fig. 3 und 4 zu sehen ist, verläuft die Nut 23 um die Rastelemente 17 herum und wird zumindest teilweise von den Rastnasen 19 überragt, die somit eine Verliersicherung für die Federscheibe 21 bilden. Zur Montage der Federscheibe 21 an der Montageplatte 7 muss die Federscheibe 21 über die Rastnasen 19 gedrückt werden.

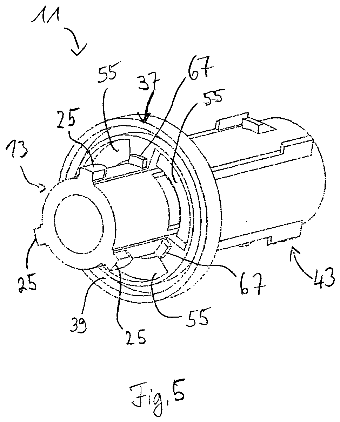

Wie insbesondere in Fig. 2 und 5 gezeigt ist, weist der Konnektor 11 einen Verriegelungsabschnitt 13 auf, der in die Durchführungsöffnung 9 der Montageplatte 7 einsteckbar und anschließend gegenüber der Montageplatte 7 verdrehbar ist, um den der Konnektor 11, wie aus Fig. 1 ersichtlich ist, mit der Montageplatte 7 zu verriegeln. Dabei sind am vorderen Ende des Verriegelungsabschnitts 13 drei Verriegelungselemente 25 angeordnet, die nach radial außen hervorstehen. In einer die Durchführungsöffnung 9 begrenzenden Wand der Montageplatte 7 ist für jedes Verriegelungselement 25 ein Kanal 27 vorgesehen (vgl. Fig. 3), in den das jeweilige Verriegelungselement 25 eingeführt werden muss, wenn der Verriegelungsabschnitt 13 in die Durchführungsöffnung 9 eingesteckt wird.

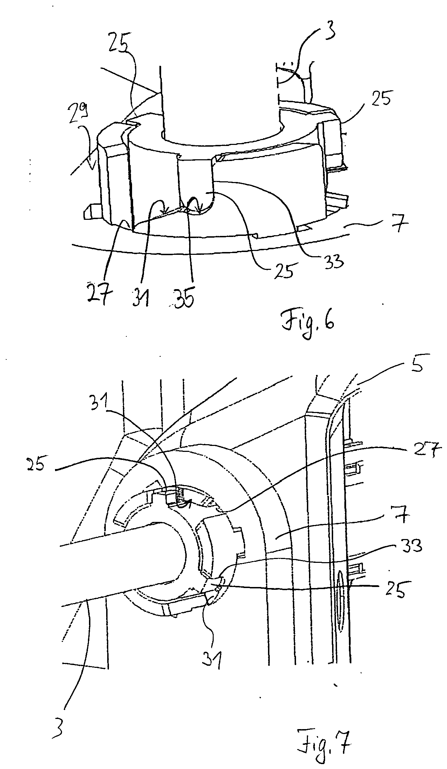

Nachdem der Verriegelungsabschnitt 13 in die Durchführungsöffnung 9 eingesteckt wurde, können die Verriegelungselemente 25 mit der vom Gehäuse 5 abgewandten Seite 29 der Montageplatte 7 durch Verdrehung des Konnektors 11 in Eingriff gebracht werden. Wie Fig. 6 und 7 zeigen, ist eine sich in Umfangsrichtung der Durchführungsöffnung 9 erstreckende Rampe als Anlaufschräge 31 an jedem Ausgang eines Kanals 27 auf der vom Gehäuse abgewandten Seite 29 der Montageplatte 7 ausgebildet, die am jeweiligen Kanalausgang beginnt und ansteigend von Kanalausgang in der Umfangsrichtung weggeführt ist. Die Anlaufschräge 31 endet mit einem Anschlag 33 für das Verriegelungselement 25. Vor dem Anschlag 33 ist eine Rastvertiefung 35 ausgebildet. Wenn der Konnektor 11 verdreht wird, läuft das Verriegelungselement 25 die ansteigende Anlaufschräge 31 hinauf, wodurch die Montageplatte 7 und der Konnektor 11 zusammengezogen werden. Bei Erreichen des Anschlags 33 setzt sich das Verriegelungselement 25 in die Rastvertiefung 35, wodurch ein unbeabsichtigtes Zurückdrehen des Konnektors 11 verhindert wird und der Konnektor 11 mit der Montageplatte 7 verriegelt ist.

Der Konnektor 11 weist - bezogen auf die Einsteckrichtung des Konnektors 11 in die Durchführungsöffnung 9 - hinter dem Verriegelungsabschnitt 13 einen Flanschabschnitt 37 auf, der an seiner dem Verriegelungsabschnitt 13 zugewandten Seite eine umlaufende Nut 39 aufweist, die zur Aufnahme einer Dichtung 41 vorgesehen ist, die an der Gehäuseaußenseite 5b zur Anlage kommt und den Verriegelungsabschnitt 13 gegenüber der Umgebung abdichtet.

Wiederum bezogen auf die Einsteckrichtung des Konnektors 11 in die Durchführungsöffnung 9 weist der Konnektor 11 hinter dem Flanschabschnitt 37 einen Kontaktierungsabschnitt 43 auf, in dem eine nicht gezeigte Ummantelung der Leitung 3 abisoliert ist und eine ebenfalls nicht gezeigte Abschirmung der Leitung 3, die den leitenden Kern der Leitung 3 umgibt, elektrisch kontaktiert wird. Zu diesem Zweck ist eine elektrisch leitende Innen-Ferrule 45 unterhalb der Abschirmung und eine die Innen-Ferrule 45 umgebende Außen-Ferrule 47 außerhalb der Abschirmung angeordnet. Die beiden Ferrulen 45, 47 sind zusammengecrimpt, so dass sie die dazwischen liegende Abschirmung sicher und dauerhaft elektrisch kontaktieren.

Ferner ist ein elektrisch leitendes Kontaktelement 49 vorgesehen, das die Außen-Ferrule 47 mit der Außenseite 5b des Gehäuses 5 elektrisch verbindet, um die Abschirmung mit dem Gehäuse 5 kurzzuschließen.

Das Kontaktelement 49 weist einen ringförmigen Grundkörper 51 auf, der auf den Verriegelungsabschnitt 13 gesetzt ist. Am Grundkörper 51 sind erste Kontaktarme 53 ausgebildet, die durch im Flanschabschnitt 37 vorgesehene Durchbrüche 55 hindurchragen und die Außen-Ferrule 47 elektrisch kontaktieren. Außerdem sind am Grundkörper 51 zweite Kontaktarme 57 angeordnet, die an der Außenseite 5b des Gehäuses 5 zur Anlage kommen, wenn der Konnektor 11 mit der Montageplatte 7 verriegelt ist, so dass über die zweiten Kontaktarme das Gehäuse elektrisch kontaktiert und die Abschirmung mit dem Gehäuse kurzgeschlossen wird.

In Einsteckrichtung des Konnektors 11 in die Durchführungsöffnung 9 gesehen ist innerhalb des Kontaktierungsabschnitts 43 hinter den beiden Ferrulen 45, 47 eine Unterlegscheibe 59 angeordnet. Hinter der Unterlegscheibe 59 ist zudem eine Kabeldichtung 61 vorgesehen, die ebenfalls innerhalb des Kontaktierungsabschnitts 43 angeordnet ist. Die Unterlegscheibe 59 und die Kabeldichtung 61 umgeben jeweils die elektrische Leitung 3. Durch die Kabeldichtung 61 wird das Innere des Kontaktierungsabschnitts 43 gegenüber der Umgebung abgedichtet. Zusätzlich ist noch eine Dichtungskappe 63 vorgesehen, die auf das hintere Ende des Kontaktierungsabschnitts 43 gesteckt und am Kontaktierungsabschnitt 43 eingeclipst ist.

Wie eingangs der Figurenbeschreibung erwähnt wurde, ist die beispielhaft beschriebene Vorrichtung 1 zur Durchführung zweier Leitungen 3, 3' durch das Gehäuse 5 vorgesehen. Die Leitungen 3, 3' können sich beispielsweise im Hinblick auf ihren Verwendungszweck unterscheiden, weshalb zur Unterscheidung unterschiedliche Konnektoren 11 und 11' zum Einsatz kommen können. Beispielsweise kann die eine Leitung 3 eine Plusleitung und die andere Leitung 3' eine Minusleitung sein.

Um sicherzustellen, dass der Konnektor 11 nur an der in Fig. 1 oben liegenden Durchführungsöffnung 9 und der Konnektor 11' nur an der darunter liegenden Durchführungsöffnung 9' angeordnet werden kann, sind an den Konnektoren 11, 11' und an den Durchführungsöffnungen 9, 9' Codierungsmittel vorgesehen.

Als Codierungsmittel sind Ausnehmungen 65 im Bereich der jeweiligen Durchführungsöffnung 9 an der dem Gehäuse 5 zugewandten Seite 15 der Montageplatte 7 vorgesehen, die mit am Verriegelungsabschnitt 13 des Konnektors 11 ausgebildeten Erhebungen 67 zusammenwirken. Korrekt dimensionierte Erhebungen 67 werden in den Ausnehmungen 65 aufgenommen, wenn der Verriegelungsabschnitt 13 in die Durchführungsöffnung 9 eingesteckt wird und beim Verdrehen des Konnektors 11 in den Ausnehmungen 65 geführt. Weist ein Konnektor 11' dagegen überdimensionierte Erhebungen auf, kann dieser nicht vollständig in die Durchführungsöffnung 9 eingesteckt werden, da seine Erhebungen nicht in den Ausnehmungen 65 aufgenommen werden können. Somit wird erreicht, dass nur ein passender Konnektor 11 an der Durchführungsöffnung 9 angeordnet werden kann.

Zusätzlich oder alternativ können die Verriegelungselemente 25 des Konnektors 11 eine geringere Breite und/oder eine geringer Höhe aufweisen als diejenigen des Konnektors 11'. Da die Kanäle 27 so tief und so breit wie die Verriegelungselemente 25 des Konnektors 11 hoch und breit sind, lässt sich nur der Konnektor 11, nicht aber der Konnektor 11' in die Durchführungsöffnung 9 einstecken.

Zusätzlich oder alternativ kann der Durchmesser der oben liegenden Durchführungsöffnung 9 größer sein als der Durchmesser der unten liegenden Durchführungsöffnung 9' und entsprechend kann der Verriegelungsabschnitt 13 des Konnektors 11 einen größeren Außendurchmesser als der Verriegelungsabschnitt 13' des Konnektors 11' aufweisen. Der Konnektor 11 passt somit nicht in die Durchführungsöffnung 9'.

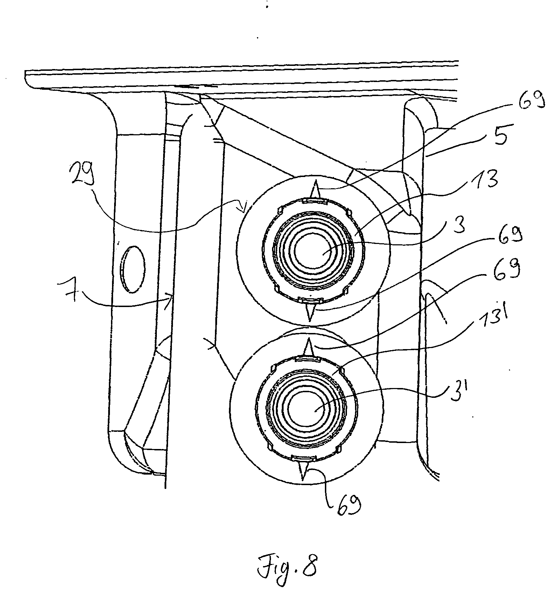

Wie in Fig. 8 ersichtlich ist, können Markierungen 69 an der vom Gehäuse abgewandten Seite 29 der Montageplatte 7 ausgebildet sein, durch die angezeigt wird, dass der jeweilige Verriegelungsabschnitt 13, 13' bis zum Anschlag 33 verdreht und somit korrekt verriegelt ist.

Zur Montage der Vorrichtung 1 wird die Montageplatte 7 am Gehäuse 5 eingeclipst. Die beiden Ferrulen 45, 47, die Unterlegscheibe 59 und die Kabeldichtung 61 werden an der elektrischen Leitung 3, 3' angebracht und anschließend im Kontaktierungsabschnitt 43 angeordnet. Am hinteren Ende der Konnektors 11, 11' wird die Dichtungskappe 63 angeordnet. Außerdem wird die Dichtung 41 am Flanschabschnitt 37 angebracht und das Kontaktelement 49 wird auf den Verriegelungsabschnitt 13 gesetzt. Die Leitung 3, 3' wird dann von der Außenseite 5b des Gehäuses 5 her in die jeweilige Durchführungsöffnung 9, 9' der Montageplatte 7 eingeführt. Anschließend wird der Konnektor 11, 11' mit der Montageplatte 7 verriegelt.

Wie Fig. 1 zeigt, ist bei dem dargestellten Beispiel am Ende der Leitung 9, 9' ein Kabelschuh 71, 71' angeordnet. Jeder Kabelschuh 71, 71' wird bei der Montage der Leitung 3, 3' in dem jeweiligen Konnektor 11, 11' derart ausgerichtet, dass dieser nach der Verriegelung des jeweiligen Konnektors 11, 11' mit der Montageplatte 7 eine vorgegebene Winkelstellung α, β einnimmt, die zum Beispiel durch eine Montagevorschrift vorgegeben sein kann.

Bei dem Kabelschuh 71, 71' handelt es sich nur um ein mögliches Beispiel eines elektrischen Verbinders. Alternativ kann der elektrische Verbinder auch durch ein buchsen- oder steckerförmiges Kontaktteil gebildet sein.

### Bezugszeichenliste

- 1: Vorrichtung
- 3, 3': elektrische Leitung
- 5: Gehäuse
- 5a: Innenseite
- 5b: Außenseite
- 7: Montageplatte
- 9, 9': Durchführungsöffnung
- 11, 11': Konnektor
- 13, 13': Verriegelungsabschnitt
- 15: Seite der Montageplatte
- 17: Rastelemente
- 19: Rastnase
- 21: Federscheibe
- 23: Nut
- 25: Verriegelungselement
- 27: Kanal
- 29: Seite der Montageplatte
- 31: Anlaufschräge
- 33: Anschlag
- 35: Rastvertiefung
- 37: Flanschabschnitt
- 39: Nut
- 41: Dichtung
- 43: Kontaktierungsabschnitt
- 45: Innen-Ferrule
- 47: Außen-Ferrule
- 49: Kontaktelement
- 51: Grundkörper
- 53: Kontaktarm
- 55: Durchbruch
- 57: Kontaktarm
- 59: Unterlegscheibe
- 61: Kabeldichtung
- 63: Dichtungskappe
- 65: Ausnehmung
- 67: Erhebung
- 69: Markierung
- 71, 71': Kabelschuh

## Patentansprüche

1. Baugruppe umfassend
zwei elektrische Leitungen (3, 3'), insbesondere Hochspannungsleitungen,
ein Gehäuse (5), insbesondere Batteriegehäuse, und eine Vorrichtung zur Durchführung der elektrischen Leitungen (3, 3') durch das Gehäuse (5), umfassend
eine Montageplatte (7), die an einer ersten Seite (5a) des Gehäuses (5) derart anbringbar ist, dass zwei in der Montageplatte (7) ausgebildete Durchführungsöffnungen (9, 9') mit zwei im Gehäuse (5) vorgesehenen Gehäuseöffnungen ausgerichtet sind, und
zwei die Leitungen (3, 3') auf einer der ersten Seite (5a) gegenüberliegenden zweiten Seite (5b) des Gehäuses (5) umgebende Konnektoren (11, 11'), wobei
jeder Konnektor (11, 11') einen Verriegelungsabschnitt (13, 13') aufweist, welcher in eine der Durchführungsöffnungen (9, 9') einsteckbar und durch anschließende Verdrehung des Konnektors (11, 11') an der Montageplatte (7) verriegelbar ist,
jeder Verriegelungsabschnitt (13, 13') zumindest ein Verriegelungselement (25) aufweist, welches mit der Montageplatte (7), insbesondere mit der vom Gehäuse (5) abgewandten Seite (29) der Montageplatte (7) in Eingriff gebracht werden kann,
jedes Verriegelungselement (25) am Verriegelungsabschnitt (13, 13') nach radial außen hervorsteht und ein Kanal (27) in einem die jeweilige Durchführungsöffnung (9, 9') umgebenden Rand der Montageplatte (7) ausgebildet ist, durch den das Verriegelungselement (25) hindurchführbar ist,
an der vom Gehäuse (5) abgewandten Seite (29) der Montageplatte (7) eine Anlaufschräge (31) für jedes Verriegelungselement (25) vorgesehen ist, die am Ausgang des jeweiligen Kanals (27) beginnt und sich in Umfangsrichtung der jeweiligen Durchführungsöffnung (9, 9') erstreckt, so dass das Verriegelungselement (25) bei der Verdrehung des jeweiligen Konnektors (11, 11') zur Verriegelung des Konnektors (11, 11') mit der Montageplatte (7) die Anlaufschräge (31) hinaufgleitet und die Montageplatte (7)
und der Konnektor (11, 11') zusammengezogen werden, **dadurch gekennzeichnet, dass**
die Montageplatte (7) im Bereich der Durchführungsöffnungen (9, 9') erste Codierungsmittel (27, 65) und die Verriegelungsabschnitte (13, 13') zweite Codierungsmittel (25, 67) aufweisen, wobei die jeweiligen ersten und zweiten Codierungsmittel (25, 27, 65, 67) derart miteinander zusammenwirken, dass die Verriegelungsabschnitte (13, 13') nur bei zueinander komplementär ausgebildeten ersten und zweiten Codierungsmitteln (25, 27, 65, 67) an der Montageplatte (7) verriegelbar sind und dass die ersten und zweiten Codierungsmittel (27, 25, 65, 67) das Einstecken der Verriegelungsabschnitte (13, 13') in die jeweilige Durchführungsöffnung und/oder deren anschließende Verdrehung blockieren, wenn die Codierungsmittel (25, 27, 65, 67) nicht komplementär zueinander ausgebildet sind,
jeder Konnektor (11, 11') einen Kontaktierungsabschnitt (43) aufweist, in welchem mindestens eine elektrisch leitfähige Ferrule (45, 47) zur elektrischen Kontaktierung einer Abschirmung der jeweiligen Leitung (3, 3') angeordnet ist,
ein elektrisch leitendes Kontaktelement (49) zur elektrischen Verbindung des Gehäuses (5) mit der Ferrule (45, 47) vorgesehen ist,
jedes Kontaktelement (49) einen Grundkörper (51) aufweist, der den Verriegelungsabschnitt (13, 13') umgibt und an dem zumindest ein erster Kontaktarm (53) angeordnet ist, der sich bis zu der im Kontaktierungsabschnitt (43) angeordneten Ferrule (45, 47) hin erstreckt, wobei, bevorzugt, der Kontaktarm (53) durch einen im Flanschabschnitt (37) ausgebildeten Durchbruch (55) geführt ist, und
an jedem Grundkörper (51) zweite Kontaktarme (57) angeordnet sind, die an der zweiten Seite (5b) des Gehäuses (5) zur Anlage kommen, wenn der jeweilige Konnektor (11, 11') mit der Montageplatte (7) verriegelt ist.

2. Baugruppe nach Anspruch 1,
**dadurch gekennzeichnet, dass**
die Montageplatte (7) an der dem Gehäuse (5) zugewandten Seite (15) Rastelemente (17) zur Festlegung der Montageplatte (7) am Gehäuse (5) aufweist.

3. Baugruppe nach Anspruch 2,
**dadurch gekennzeichnet, dass**
die Rastelemente (17) um die Durchführungsöffnungen (9, 9') herum versetzt zueinander angeordnet und durch die Gehäuseöffnungen durchführbar sind, wobei bevorzugt jedes Rastelement (17) eine sich nach radial außen erstreckende, an der zweiten Seite (5b) des Gehäuses (5) einrastbare Rastnase (19) aufweist.

4. Baugruppe nach einem der vorhergehenden Ansprüche,
**dadurch gekennzeichnet, dass**
eine Federscheibe (21), bevorzugt verliersicher, an der dem Gehäuse (5) zugewandten Seite (15) der Montageplatte (7), insbesondere konzentrisch zu jeder Durchführungsöffnung (9, 9'), angeordnet ist.

5. Baugruppe nach Anspruch 4,
**dadurch gekennzeichnet, dass**
eine Nut (23) zur Aufnahme der Federscheibe (21) an der dem Gehäuse (5) zugewandten Seite (15) der Montageplatte (7) vorgesehen ist.

6. Baugruppe nach einem der vorhergehenden Ansprüche,
**dadurch gekennzeichnet, dass**
jede Anlaufschräge (31) an ihrem vom Kanalausgang abgewandten Ende einen Anschlag (33) für das jeweilige Verriegelungselement (25) aufweist und/oder dass in jeder Anlaufschräge (31), insbesondere vor dem Anschlag (33), eine Rastvertiefung (35) für das jeweilige Verriegelungselement (25) ausgebildet ist.

7. Baugruppe nach einem der vorhergehenden Ansprüche,
**dadurch gekennzeichnet, dass**
jeder Konnektor (11, 11') in Einsteckrichtung seines Verriegelungsabschnitts (13, 13') in die jeweilige Durchführungsöffnung (9, 9') betrachtet hinter dem Verriegelungsabschnitt (13, 13') einen Flanschabschnitt (37) aufweist, der auf der dem Verriegelungsabschnitt (13, 13') zugewandten Seite eine umlaufende Nut (39) für eine Dichtung (41) aufweist.

8. Baugruppe nach einem der vorhergehenden Ansprüche,
**dadurch gekennzeichnet, dass**
eine elektrisch leitfähige Innen-Ferrule (45) unterhalb jeder Abschirmung angeordnet ist und jeweils eine elektrisch leitfähige Außen-Ferrule (47) die Abschirmung und die Innen-Ferrule (45) umgibt,
wobei, bevorzugt, die jeweiligen beiden Ferrulen (45, 47) zusammengecrimpt sind.

## Claims

1. An assembly comprising
two electrical lines (3, 3'), in particular high-voltage lines, a housing (5), in particular a battery housing, and
an apparatus for leading the electrical lines (3, 3') through the housing (5), said apparatus comprising
an assembly plate (7) which can be attached to a first side (5a) of the housing (5) such that two lead-through openings (9, 9') formed in the assembly plate (7) are aligned with two housing openings provided in the housing (5); and
two connectors (11, 11') surrounding the lines (3, 3') on a second side (5b) of the housing (5) disposed opposite the first side (5a), wherein
each connector (11, 11') has a locking section (13, 13') which can be inserted into one of the lead-through openings (9, 9') and which can be locked to the assembly plate (7) by a subsequent rotation of the connector (11, 11'),
wherein
each locking section (13, 13') has at least one locking element (25) which can be brought into engagement with the assembly plate (7), in particular with the side (29) of the assembly plate (7) remote from the housing (5);
each locking element (25) projects radially outwardly at the locking section (13, 13') and a passage (27) is formed in an edge of the assembly plate (7) which surrounds the respective lead-through opening (9, 9') and through which the locking element (25) can be led; and
a run-on chamfer (31) for each locking element (25) is provided at the side (29) of the assembly plate (7) remote from the housing (5), said run-on chamfer (31) starting at the output of the respective passage (27) and extending in the peripheral direction of the respective lead-through opening (9, 9') so that, on the rotation of the respective connector (11, 11') for locking the connector (11, 11') to the assembly plate (7), the locking element (25) slides up the run-on chamfer (31) and the assembly plate (7) and the connector (11, 11') are drawn together,
**characterized in that**
the assembly plate (7) has first coding means (27, 65) in the region of the lead-through openings (9, 9') and the locking sections (13, 13') have second coding means (25, 67), with the respective first and second coding means (25, 27, 65, 67) cooperating with one another such that the locking sections (13, 13') can only be locked to the assembly plate (7) if the first and second coding means (25, 65, 67) are designed complementary to one another (25, 27, 65, 67) and such that the first and second coding means (27, 25, 65, 67) block the insertion of the locking sections (13, 13') into the respective lead-through opening and/or their subsequent rotation if the coding means (25, 27, 65, 67) are not designed complementary to one another;
**in that** each connector (11, 11') has a contacting section (43) in which at least one electrically conductive ferrule (45, 47) for electrically contacting a shield of the respective line (3, 3') is arranged;
**in that** an electrically conductive contact element (49) is provided for electrically connecting the housing (5) to the ferrule (45, 47);
**in that** each contact element (49) has a base body (51) which surrounds the locking section (13, 13') and at which at least one first contact arm (53) is arranged which extends up to the ferrule (45, 47) arranged in the contacting section (43), with, preferably, the contact arm (53) being led through an opening (55) formed in the flange section (37); and
**in that** second contact arms (57) are arranged at each base body (51) and come into contact with the second side (5b) of the housing (5) when the respective connector (11, 11') is locked to the assembly plate (7).

2. An assembly in accordance with claim 1,
**characterized in that**
the assembly plate (7) has latching elements (17) at the side (15) facing the housing (5) for fixing the assembly plate (7) to the housing (5).

3. An assembly in accordance with claim 2,
**characterized in that**
the latching elements (17) are arranged offset from one another around the lead-through openings (9, 9') and can be led through the housing openings, with preferably each latching element (17) having a latch nose (19) which extends radially outwardly and which can be latched to the second side (5b) of the housing (5).

4. An assembly in accordance with any one of the preceding claims,
**characterized in that**
a spring washer (21) is arranged, preferably in a captive manner, at the side (15) of the assembly plate (7) facing the housing (5), in particular concentrically to each lead-through opening (9, 9').

5. An assembly in accordance with claim 4,
**characterized in that**
a groove (23) for receiving the spring washer (21) is provided at the side (15) of the assembly plate (7) facing the housing (5).

6. An assembly in accordance with any one of the preceding claims,
**characterized in that**
each run-on chamfer (31) has an abutment (33) for the respective locking element (25) at its end remote from the passage output; and/or **in that** a latch recess (35) for the respective locking element (25) is formed in each run-on chamfer (31), in particular in front of the abutment (33).

7. An assembly in accordance with any one of the preceding claims,
**characterized in that**
each connector (11, 11') has a flange section (37) behind the locking section (13, 13'), viewed in the insertion direction of its locking section (13, 13') into the respective lead-through opening (9, 9'), said flange section (37) having a peripheral groove (39) for a seal (41) at the side facing the locking section (13, 13').

8. An assembly in accordance with any one of the preceding claims,
**characterized in that**
an electrically conductive inner ferrule (45) is arranged beneath each shield and a respective electrically conductive outer ferrule (47) surrounds the shield and the inner ferrule (45), with, preferably, the respective two ferrules (45, 47) being crimped together.

## Revendications

1. Ensemble comportant
deux lignes électriques (3, 3'), en particulier des lignes à haute tension, un boîtier (5), en particulier un boîtier de batterie, et
un dispositif pour faire passer les lignes électriques (3, 3') à travers le boîtier (5), comprenant
une plaque de montage (7) qui peut être fixée sur un premier côté (5a) du boîtier (5) de telle manière que deux ouvertures de passage (9, 9') formées dans la plaque de montage (7) soient alignées avec deux ouvertures de boîtier prévues dans le boîtier (5), et
deux connecteurs (11, 11') entourant les lignes (3, 3') sur un deuxième côté (5b) du boîtier (5) opposé au premier côté (5a),
dans lequel
chaque connecteur (11, 11') présente une portion de verrouillage (13, 13') qui peut être enfichée dans l'une des ouvertures de passage (9, 9') et peut être verrouillée sur la plaque de montage (7) par rotation successive du connecteur (11, 11'),
chaque portion de verrouillage (13, 13') présente au moins un élément de verrouillage (25) qui peut être amené en engagement avec la plaque de montage (7), en particulier avec le côté (29) de la plaque de montage détourné du boîtier (5),
chaque élément de verrouillage (25) sur la portion de verrouillage (13, 13') fait saillie radialement vers l'extérieur, et un canal (27) est réalisé dans un bord de la plaque de montage (7) entourant l'ouverture de passage respective (9, 9'), canal à travers lequel peut passer l'élément de verrouillage (25), sur le côté (29) de la plaque de montage (7) détourné du boîtier (5) est prévue une pente de montée (31) pour chaque élément de verrouillage (25), qui commence à la sortie du canal respectif (27) et qui s'étend dans la direction circonférentielle de l'ouverture de passage respective (9, 9'), de sorte que l'élément de verrouillage (25) glisse vers le haut sur la pente de montée (31) lorsque le connecteur respectif (11, 11') est tourné pour verrouiller le connecteur (11) à la plaque de montage (7), et
la plaque de montage (7) et le connecteur (11, 11') sont serrés l'un contre l'autre,
**caractérisé en ce que**
la plaque de montage (7) présente des premiers moyens de codage (27, 65) dans la zone des ouvertures de passage (9, 9'), et les portions de verrouillage (13, 13') présentent des seconds moyens de codage (25, 67), les premiers et seconds moyens de codage respectifs (25, 27, 65, 67) coopérant entre eux de telle sorte que les portions de verrouillage (13, 13') ne peuvent être verrouillées sur la plaque de montage (7) que si les premiers et seconds moyens de codage (25, 27, 65, 67) sont réalisés de façon complémentaire, et **en ce que**
les premiers et seconds moyens de codage (27, 25, 65, 67) bloquent l'enfichage des portions de verrouillage (13, 13') dans l'ouverture de passage respective et/ou leur rotation successive si les moyens de codage (25, 27, 65, 67) ne sont pas réalisés de façon complémentaire entre eux,
chaque connecteur (11, 11') présente une portion de mise en contact (43) dans laquelle est disposée au moins une virole électriquement conductrice (45, 47) pour la mise en contact électrique avec un blindage de la ligne respective (3, 3'),
un élément de contact (49) électriquement conducteur est prévu pour relier électriquement le boîtier (5) à la virole (45, 47),
chaque élément de contact (49) présente un corps de base (51) qui entoure la portion de verrouillage (13, 13') et sur lequel est disposé au moins un premier bras de contact (53) qui s'étend jusqu'à la virole (45, 47) disposée dans la portion de mise en contact (43), le bras de contact (53) étant de préférence guidé à travers une traversée (55) formée dans la portion de bride (37), et
sur chaque corps de base (51) sont disposés des seconds bras de contact (57) qui viennent en appui contre le second côté (5b) du boîtier (5) lorsque le connecteur respectif (11, 11') est verrouillé à la plaque de montage (7).

2. Ensemble selon la revendication 1,
**caractérisé en ce que**
sur le côté (15) tourné vers le boîtier (5), la plaque de montage (7) présente des éléments d'enclenchement (17) pour immobiliser la plaque de montage (7) sur le boîtier (5).

3. Ensemble selon la revendication 2,
**caractérisé en ce que**
les éléments d'enclenchement (17) sont disposés autour des ouvertures de passage (9, 9') en étant décalés les uns par rapport aux autres et peuvent être passés à travers les ouvertures de boîtier, de préférence chaque élément d'enclenchement (17) présentant un bec d'enclenchement (19) s'étendant radialement vers l'extérieur et pouvant être enclenché sur le second côté (5b) du boîtier (5).

4. Ensemble selon l'une des revendications précédentes,
**caractérisé en ce que**
une rondelle élastique (21) est disposée de préférence de façon imperdable sur le côté (15) de la plaque de montage (7) tourné vers le boîtier (5), en particulier concentriquement à chaque ouverture de passage (9, 9').

5. Ensemble selon la revendication 4,
**caractérisé en ce que**
une rainure (23) destinée à recevoir la rondelle élastique (21) est prévue sur le côté (15) de la plaque de montage (7) tourné vers le boîtier (5).

6. Ensemble selon l'une des revendications précédentes,
**caractérisé en ce que**
chaque pente de montée (31) présente une butée (33) pour l'élément de verrouillage respectif (25) à son extrémité détournée de la sortie du canal et/ou **en ce que**
une cavité d'enclenchement (35) pour l'élément de verrouillage respectif (25) est formée dans chaque pente de montée (31), en particulier devant la butée (33).

7. Ensemble selon l'une des revendications précédentes,
**caractérisé en ce que**
chaque connecteur (11), vu dans la direction d'enfichage de sa portion de verrouillage (13, 13') dans l'ouverture de passage respective (9, 9'), présente une portion de bride (37) derrière la portion de verrouillage (13, 13'), laquelle portion de bride présente une rainure périphérique (39) pour un joint d'étanchéité (41) sur le côté tourné vers la portion de verrouillage (13, 13').

8. Ensemble selon l'une des revendications précédentes,
**caractérisé en ce que**
une virole intérieure (45) électriquement conductrice est disposée au-dessous de chaque blindage, et une virole extérieure (47) électriquement conductrice entoure le blindage et la virole intérieure (45),
les deux viroles respectives (45, 47) étant de préférence serties ensemble.
